# EUROPEAN PATENT SPECIFICATION

(11) **EP 2 427 374 B1**
(45) Date of publication and mention of the grant of the patent: **27.11.2013**
(21) Application number: 10727874.9
(22) Date of filing: 07.05.2010
(51) Int. Cl.: B64C 39/02, B64C 27/20

(54) **AERIAL ROBOTIC SYSTEM**
LUFTGESTÜTZTES ROBOTERSYSTEM
SYSTÈME ROBOTIQUE AÉRIEN

(30) Priority: 08.05.2009 IT MO20090121
(43) Date of publication of application: 14.03.2012
(73) Proprietor: Aermatica S.P.A., 21040 Venegono Superiore (VA) (IT)
(72) Inventor: MARRAS, Paolo, 22079 Villa Guardia (CO) (IT); TATTARLETTI, Barbara, 22079 Villa Guardia (CO) (IT); DENNA, Maurizio, 22070 Lurago Marinone (CO) (IT); SPERINDEO, Samuel, 21100 Varese (IT); GRASSI, Sergio, 20099 Sesto San Giovanni (MI) (IT); BOTTASSO, Carlo, 20052 Monza (MB) (IT); REFOLO, Piero, 21040 Gerenzano (VA) (IT)
(74) Representative: Crugnola, Pietro
(86) International application number: PCT/IB2010/052032
(87) International publication number: WO 2010/128489

(56) References cited:
- WO-A1-2007/141795
- DE-A1-102005 014 949
- US-A- 5 419 514

## Description

The invention relates to an aerial robotic system comprising a four-rotor aircraft that is able to acquire and transmit images and/or other sensory information to an operator positioned on the ground.

A remote-controlled aircraft provided with four rotors, each of which is provided with fixed-pitch blades, is known.

The aforesaid aircraft is visually remote-controlled by a user positioned on the ground and requires significant piloting skill from such a user.

A drawback of this aircraft is that it is not able to fly in conditions that are such as to prevent undesired collisions with sufficient safety. The safety and precision in flight of such aircraft in fact noticeably depends on the experience and piloting ability of the user on the ground. The user has to be able to identify from the ground any obstacles located along the advance path of the aircraft and be skilful at giving the correct commands promptly. However great the skill of the user, it may not be sufficient to avoid unexpected obstacles along the advance path of the aircraft. Further, the fact that the user has to take account from the ground of how the aircraft is oriented and of the direction of the flight path thereof, i.e. whether it is moving towards or away from the user, makes control operations from the ground very complex and difficult. Flight safety of the aforesaid aircraft also depends on the visibility conditions in which the user controls the aircraft from the ground. In conditions of poor visibility or in general in cases in which the visual contact between the user and the aircraft is interrupted or is inappropriate safety problems arise both with regard to the aircraft and with regard to third parties, in particular in populated areas. There are thus clearly limits to the useful scope of the aforesaid aircraft.

In critical situations, for example in the event of a fault or collision, the aircraft may escape from the control of the user and crash at high impact speed on the ground. This may obviously have very serious consequences.

WO2007141795 discloses an unmanned air vehicle system including a ground station, a platform configured for carrying a payload and having a propulsion system for enabling the platform at least to selectively sustain a predetermined altitude above the ground station when in flight mode. The system also includes a tether which operatively couples the ground station with the platform, and provides electrical communication between the platform and the ground station.

One object of the invention is to improve known four-rotor aircrafts.

A further object of the invention is to provide a four-rotor aircraft that is able to fly in conditions of great safety.

A still further object of the invention is to provide a four-rotor aircraft that has better flight performance and is more easily controllable by an operator on the ground who can determine the movements thereof independently of the position, orientation and advance direction of the aircraft. A still further object of the invention is to provide a four-rotor aircraft that is able to considerably reduce the risks of collisions during flight and/or of impact on the ground and/or to significantly limit possible damage that could be generated in the event of an aircraft fault or accident.

According to the invention, an aerial robotic system is provided as defined in claim 1.

The invention can be better understood and implemented with reference to the attached drawings, which illustrate an embodiment thereof by way of non-limiting example, in which:
Figure 1 is a schematic prospective view of an aerial robotic system;
Figure 2 is a schematic plan view of the aerial robotic system;
Figure 3 shows a configuration of the aerial robotic system schematically;
Figure 4 is a flow chart of the aerial robotic system.

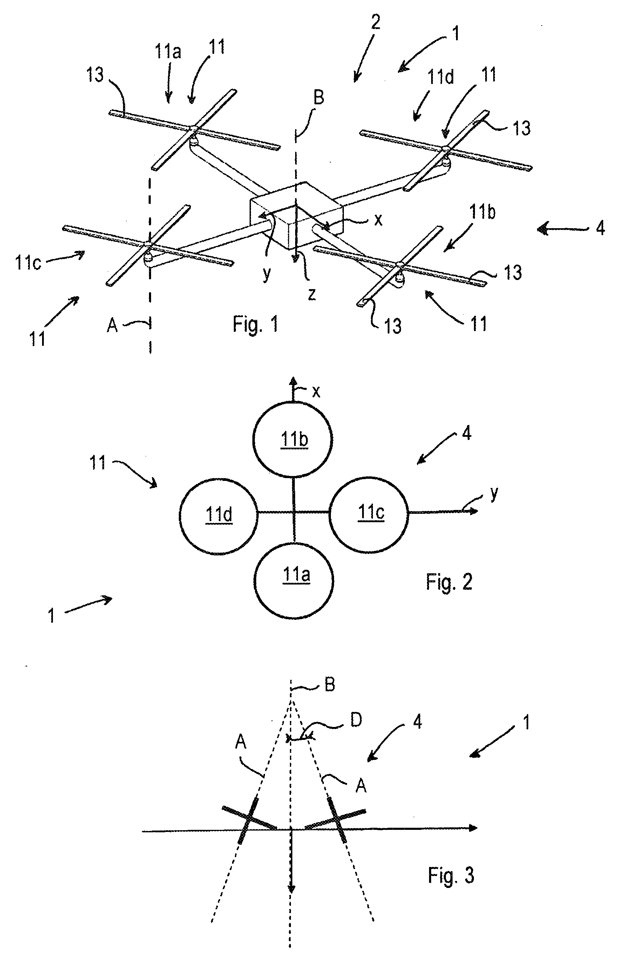

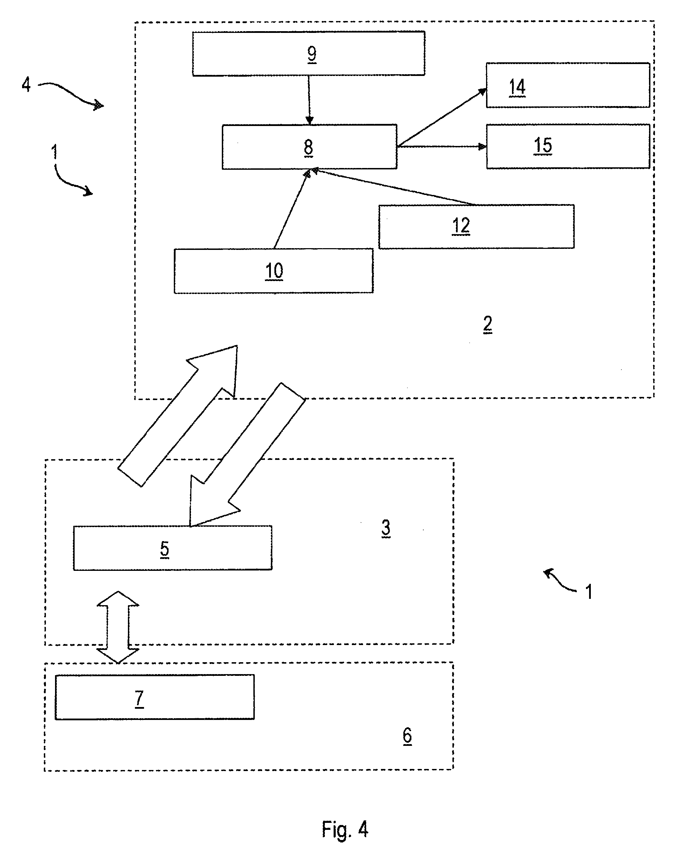

With reference to Figures 1 to 4, a smart and autonomous aerial robotic system 1 is shown that is able to acquire and/or transmit images and/or other sensory information to be supplied to an operator positioned on the ground. The aerial robotic system 1 can also be used to transport objects and to perform other operations in places that are inaccessible to humans or which are difficult for humans to access.

The aerial robotic system 1 is suitable for being used in various environments and for various applications. The aerial robotic system 1 may, for example, be used to acquire aerial images, to monitor urban constructions, or to inspect infrastructures that are difficult to view such as dykes or other structures the inspection of which entails high costs and risks for man and a significant waste of time. The aerial robotic system 1 can be used in critical situations, for example to reach places that are dangerous for humans and/or difficult to reach because of the effect of accidents or other causes or events. The aerial robotic system 1 is suitable for use by operators such as the armed forces, the police, the fire service or other special intervention forces, etc.

The aerial robotic system 1 comprises an aerial unit 2 configured for flying, and a ground unit 3, configured for communicating from the ground with the aerial unit 2. The aerial unit 2 comprises an aircraft 4, in particular a four-rotor aircraft 4 which will be disclosed below.

The ground unit 3 is provided with a calculating device 5, or ground computer, which processes the commands given by an operator 6 to generate signals to be sent to the aerial unit 2. In particular, the calculating device 5 sends command signals that guide and/or control the aerial unit 2. The ground unit 3 sends to and receives from the aerial unit 2 signals and/or data via a wireless connection type. The calculating device 5 is further able to process data and/or signals that arrive from the aerial unit 2. All the mission parameters can be controlled by the ground unit 3 in which the "software programmes" of planning, controlling and monitoring the aircraft 4 in real time are performed.

The ground unit 3 comprises a software interface device 7 that is easy to use by means of which the operator 6 transmits commands to or enters data into the calculating device 5.

The aircraft 4 is able to take off and land vertically and can be provided with a significant payload. In an embodiment, the payload may comprise, for example, a standard video camera and/or an infrared video camera, a camera and/or other detecting devices such as spectographs, hyperspectral and multispectral chambers, etc. The aircraft 4 is configured for carrying the payload with it along a planned trajectory or on the basis of manual commands given by the operator 6 on the ground that can be independent of the position, orientation and of the advance direction of the aircraft.

The aircraft 4 comprises four rotors 11. The rotors 11 can be driven by one or more motors according to various desired configurations. For example, in a version, a specific motor can selectively drive one or more specific rotors, or can simultaneously drive several specific rotors. Similarly, one specific rotor can be driven by one or more specific motors. In this manner it is possible to reinforce the operational continuity of a rotor that, for example in the case of a fault of a motor arranged for driving the rotor, can continue to be driven by another motor. In one non-limiting example disclosed with reference to the enclosed Figures, each of the rotors 11 is driven by a respective motor 15. In this embodiment, the four motors 15 operate independently of one another. Similarly, the rotors 15 can be driven independently of one another.

Blades 13 with a variable pitch are associated with each rotor 11. The aircraft 4 is provided with a varying pitch system configured for varying the pitch of each rotor 11 independently of one another.

Figure 3 shows a configuration of the rotors 11 in which the axes A of each rotor 11 are tilted by a dihedral angle D with respect to a symmetrical radial axis B of the aircraft 4. The axes A are tilted in such a manner as to converge in the half-space located above the aircraft 4. In this configuration there is a positive dihedral angle D. A dihedral angle D that is other than zero influences the features of absorption of roll and pitching and influences the lateral stability of the aircraft 4 in flight. It is possible to choose a suitable dihedral angle D value to improve the dynamic response and stability of the aircraft. In particular, the dihedral angle D of the aircraft 4 can have a value comprised between 0° and 20°.

The aircraft 4 comprises a high-level control system 8.

The aircraft 4 is provided with an inertial and navigation sensor 9, with a GPS (Global Positioning System) and with an on-board parameter sensor 10 that communicate with the high-level control system 8 and send to the latter data relating to the position, motion status of the aircraft 4 and/or other information.

The control system 8 is configured for controlling the propulsion and the dynamics of the aircraft 4, thus for also controlling the motors 15 of the rotors 11. The high-level control system 8 is able to manage the trim of the aircraft 4, so as to simplify piloting thereof from the ground.

To the control system 8 a pitch control device 14 is functionally connected that adjusts the pitch of the blades 14 on the basis of the commands supplied by the operator 6 on the ground or on the basis of the previously planned trajectory. In particular, the pitch control device 14 is configured for varying the collective pitch of the blades 13 of each rotor 11, so as to act on the traction of the aircraft 4. The pitch of the blades 13 of a rotor 11 can be varied in a manner that is independent of the other rotors 11.

Owing to the control system 8 it is possible to obtain a stabilised flight that enables images and sensory data to be acquired iteratively and in a precise manner. The images and sensory data are sent to the ground unit 3, in which, owing to the interface device 7, they can be managed and viewed by the operator 6.

The control system 8 is run by an on-board computer and enables the aircraft 4 to react to unexpected events such as possible faults and/or malfunctions. Sensors 12 for detecting obstacles can be provided on the aircraft 4 that identify possible obstacles along the trajectory of the aircraft 4 and communicate with the control system 8, which in turn modifies the trajectory of the aircraft 4 to avoid undesired collisions. Owing to the sensors for detecting obstacles, the aircraft 4 is safer, regardless of the piloting skill of the operator 6.

The interface device 7 may comprise a "GUI" user-interface (Graphical User Interface) and devices for the interaction between the operator 6 and the ground unit 3 that are easy to use, such as a joystick etc. The ground unit 3 and/or the interface device 7 are configured in such a manner that to a command given by the operator 6 in a set direction with respect to the interface device 7 there corresponds a motion variation of the aircraft 4 in the same aforesaid direction, regardless of the advancing direction and of how the aircraft 4 is positioned and oriented with respect to the interface device 7, owing to the control system 8 that processes and compares the data supplied by the inertial and navigation sensor 9 and by the GPS that are indicative of the orientation, position and motion status of the aircraft 4, and the command given in a set direction by the user from the ground. This significantly facilitates the aircraft 4 piloting operations that in this manner can be piloted also by an operator 6 who is not very expert, who does not need to take account of how the aircraft 4 is oriented and of what its flight advance direction is, i.e. for example, whether it is approaching or moving away from the user. The control system 8 can vary the rotation speed of the rotors 11 in order to maximise the autonomy or the stability of the system. The control system 8 modifies the rotation speed of the rotors 11 in function of the weight of the sensors mounted on board and of operating conditions (for example the meteorological conditions present during the flight, altitude, etc...).

The aerial robotic system 1 is provided with a device and a procedure for emergency landing in the event of jamming or a fault in one of the motors 15. With reference to figure 2 an example is disclosed below that illustrates the operation of the aircraft 4 during the emergency landing procedure if a rotor 11a is faulty. In this situation the control system 8 detects the operating fault of the rotor 11a and acts to vary the pitches of the rotors 11c and 11d so as to obtain a traction which is able to contrast or overcome the weight of the aircraft 4. At the same time, the pitch of the rotor 11b is varied in such a manner as to obtain zero traction or traction that is equal to the traction supplied by the faulty rotor 11a. If total traction force, given by all the traction supplied by all the rotors 11, is less than the weight force of the aircraft 4, the latter starts a controlled descent to the ground. If the rotor 11c and the rotor 11d have the same rotation directions, on the aircraft 4 a non-zero reaction torque is generated around a yaw axis Z shown in Figure 2. This tends to rotate the aircraft 4 around the yaw axis Z. The control system 8 varies the pitch of the rotor 11b in such a manner as to stabilise the aircraft 4 around a pitching axis Y passing through the rotors 11c and 11d (as shown in Figure 2). The varying pitch system is configured so as to be able to vary the pitch of the rotor 11b and generate a value of the traction provided by the rotor 11b that can also be negative. Stabilisation around a roll axis X (shown in Figure 2) is obtained by varying the traction supplied by the rotor 11c and by the rotor 11d.

Owing to the configuration of the aircraft 4 disclosed above, the aircraft is able to perform a controlled descent in an extremely safe manner even following a motor 15 fault or jam. Although the aircraft 4 displays a yaw motion during descent that is due to the residual reaction torque, it is stabilised around the pitching axis Y and the roll axis X and this enables it to make contact with the ground at a significantly reduced speed, maintaining a suitable trim. The aircraft 4 is provided with a system for rapidly and easily replacing the rotors 15. The aforesaid system comprises mechanical devices that enable a faulty rotor to be removed rapidly and a new rotor to be fitted safely. The rotors 11 are shaped as units that are easily decouplable from the rest of the aircraft 4.

On the aircraft 4 and on the rotors 15 suitable connectors are provided that enable the electric connection and the transmission of data and/or signals between the rotors 15 and the control system 8. Owing to the aforesaid system it is not necessary to resort to specialised personnel to replace a rotor 15.

The aircraft 4 can be provided with a protection structure suitable for enclosing the area affected by the blades 13, so as to avoid contact of the latter with other bodies.

## Claims

1. Aerial robotic system, comprising an aircraft (4) provided with four rotors (11a, 11b, 11c 11d), said aircraft (4) comprising control means (8) for controlling operating parameters of each of said rotors (11a, 11b, 11c, 11d) independently of one another, detecting means (9) for detecting the motion status and/or the position of said aircraft (4), sensor means (12) cooperating with said control means (8) for detecting and avoiding automatically possible obstacles located along the trajectory of said aircraft (4), a ground unit (3) configured for controlling from the ground said aircraft (4) and for receiving data from said aircraft (4) via a wireless-type connection, and an interface device (7) for commanding from the ground said aircraft (4) and/or for displaying said data, **CHARACTERIZED IN THAT** said aircraft (4) is provided with an inertial and navigation sensor (9), with a GPS (Global Positioning System) and with an on-board parameter sensor (10) that communicate with, and send to the control means (8) data relating to the position and the motion status of the aircraft (4), said control means (8) and said ground unit (3) being configured in such a manner that to a command given by said interface device (7) and associated with a direction with respect to said interface device (7), there corresponds a motion variation of said aircraft (4) in said same direction, in a manner that is independent from the advancing direction, and from the positioning and orientation of said aircraft (4) with respect to said interface device (7).

2. Aerial robotic system according to claim 1, further comprising a device for varying the collective pitch of the blades (13) of each rotor (11a, 11b, 11c 11d), the collective pitch associated with each rotor (11a, 11b, 11c 11d) being variable in a manner that is independent of the other rotors.

3. Aerial robotic system according to claim 1 or 2, wherein said rotors (11a, 11b, 11c 11d) rotate around respective axes (A) mutually converging in a region located above the aircraft (4).

4. Aerial robotic system according to claim 3, wherein each of said axes (A) is tilted with respect to a symmetrical axis (B) of said aircraft (4).

5. Aerial robotic system according to any one of claims from 1 to 4, further comprising a protection structure shaped for preventing contact between parts associated with the rotors (11a, 11b, 11c, 11d) and external bodies.

6. Aerial robotic system according to any one of claims from 1 to 5, said aircraft (4) being provided with means for acquiring and transmitting data and/or sensory information, said means for acquiring and transmitting data and/or sensory information comprising: a standard video camera and/or an infrared video camera, and/or a camera and/or spectographs, and/or hyperspectral cameras and/or multispectral cameras.

7. Aerial robotic system according to claim 6, wherein said control means (8) is configured for varying the rotation speed of said rotors (11a, 11b, 11c 11d) to maximise the autonomy and/or stability of said aerial robotic system (1), in function of flight operating conditions such as altitude, meteorological conditions, and/or in function of the weight of said means for acquiring and transmitting data and/or sensory information.

8. Aerial robotic system according to any one of claims from 1 to 7, further comprising a system for rapid connection and removal of the rotors (15) on said aircraft (4), said system comprising connectors for the electric connection and the transmission of data and/or signals between said rotors (15) and said control means (8).

9. Aerial robotic system according to any one of claims from 1 to 8, further comprising motor means (15) to drive said rotors (11a, 11b, 11c 11d).

10. Aerial robotic system according to claim 9, wherein said motor means comprises a plurality of motors (15), each of which is able to drive selectively one or more specific rotors, or is able to drive specific rotors simultaneously.

11. Aerial robotic system according to claim 10, wherein each of said rotors (11a, 11b, 11c 11d) is drivable by one or more specific motors (15).

12. Aerial robotic system according to any preceding claim, comprising a device configured for performing an emergency landing of said aircraft (4) in the event of a fault or jam of one of said rotors (11a, 11b, 11c 11d).

13. Aerial robotic system according to claim 12, wherein said device is configured for varying the pitch of one or more of said rotors (11a, 11b, 11c 11d) according to signals detected by said control means (8), so as to adjust the traction supplied to the aircraft (4) by said rotors (11a, 11b, 11c 11d).

## Patentansprüche

1. Luftgestütztes Robotersystem, mit einem Fluggerät (4), das mit vier Rotoren (11a, 11 b, 11 c, 11 d) bereitgestellt ist, wobei das Fluggerät (4) ein Steuermittel (8) zum Steuern von Betriebsparametern jedes der Rotoren (11a, 11b, 11c, 11d), und zwar unabhängig voneinander, Erfassungsmittel (9) zum Erfassen des Bewegungszustandes und/oder der Position des Fluggeräts (4), Sensormittel (12), die mit dem Steuermittel (8) zusammenwirken, zum Erfassen und automatischen Vermeiden von möglichen Hindernissen, die entlang der Flugbahn des Fluggeräts (4) angeordnet sind, eine Bodeneinheit (3), die zum Steuern des Fluggeräts (4) vom Boden aus und zum Empfangen von Daten von dem Fluggerät (4) über eine drahtlose Verbindung ausgebildet ist und ein Schnittstellenbauteil (7) zum Steuern des Fluggeräts (4) vom Boden aus und/oder zum Anzeigen der Daten aufweist,
**dadurch gekennzeichnet, dass** das Fluggerät (4) mit einem Trägheits- und Navigationssensor (9) bereitgestellt ist, mit einem GPS (Globales Positionierungssystem) und mit einem Bordparametersensor (10), der mit dem Steuermittel (8) kommuniziert und dem Steuermittel (8) Daten sendet, die sich auf die Position und den Bewegungszustand des Fluggeräts (4) beziehen, wobei das Steuermittel (8) und die Bodeneinheit (3) derart ausgebildet sind, dass einem Befehl, der von dem Schnittstellenbauteil (7) gegeben wird und einer Richtung relativ zu dem Schnittstellenbauteil (7) zugeordnet ist, eine Bewegungsänderung des Fluggeräts (4) in derselben Richtung entspricht unabhängig von der Vorwärtsrichtung und von der Positionierung und Orientierung des Fluggeräts (4) relativ zu dem Schnittstellenbauteil (7).

2. Luftgestütztes Robotersystem nach Anspruch 1, ferner mit einem Bauteil zum Variieren der Verstellung der Blätter (13) jedes Rotors (11 a, 11 b, 11 c, 11 d), wobei die Verstellung, die jedem der Rotoren (11 a, 11 b, 11 c, 11 d) zugeordnet ist, variabel ist unabhängig von den jeweils anderen Rotoren.

3. Luftgestütztes Robotersystem nach Anspruch 1 oder 2, wobei die Rotoren (11a, 11b, 11c, 11d) um entsprechende Achsen (A) rotieren, die in einem Bereich oberhalb des Fluggeräts (4) gemeinsam zusammentreffen.

4. Luftgestütztes Robotersystem nach Anspruch 3, wobei jede der Achsen (A) geneigt ist relativ zu einer Symmetrieachse (B) des Fluggeräts (4).

5. Luftgestütztes Robotersystem nach einem der Ansprüche 1 bis 4, ferner mit einer Schutzstruktur, die geformt ist zum Verhindern eines Kontaktes zwischen Teilen, die den Rotoren (11a, 11b, 11c, 11d) zugeordnet sind und externen Körpern.

6. Luftgestütztes Robotersystem nach einem der Ansprüche 1 bis 5, wobei das Fluggerät (4) mit Mitteln zum Ermitteln und Übertragen von Daten und/oder Sensorinformationen ausgebildet ist, wobei die Mittel zum Ermitteln und Übertragen von Daten und/oder Sensorinformationen umfassen: eine Standardvideokamera und/oder eine Infrarotvideokamera, und/oder eine Kamera und/oder Spektrographen, und/oder Hyperspektralkameras und/oder Multispektralkameras.

7. Luftgestütztes Robotersystem nach Anspruch 6, wobei das Steuermittel (8) ausgebildet ist zum Variieren der Rotationsgeschwindigkeit der Rotoren (11 a, 11 b, 11 c, 11 d), um die Unabhängigkeit und/oder die Stabilität des luftgestützten Robotersystems (1) zu maximieren in Bezug auf die Funktion von Flugbetriebsbedingungen wie Höhe, metrologische Bedingungen, und/oder in Funktion des Gewichts der Mittel zum Ermitteln und Übertragen von Daten und/oder Sensorinformationen.

8. Luftgestütztes Robotersystem nach einem der Ansprüche 1 bis 7, ferner mit einem System zum schnellen Verbinden und Entfernen der Rotoren (15) an dem Fluggerät (4), wobei das System Verbinder umfasst für die elektrische Verbindung und die Übertragung von Daten und/oder Signalen zwischen den Rotoren (15) und dem Steuermittel (8).

9. Luftgestütztes Robotersystem nach einem der Ansprüche 1 bis 8, ferner mit Motormitteln (15) zum Antreiben der Rotoren (11 a, 11 b, 11 c, 11 d).

10. Luftgestütztes Robotersystem nach Anspruch 9, wobei das Motormittel eine Mehrzahl von Motoren (15) umfasst, wobei jeder dieser fähig ist, selektiv einen oder mehrere spezifische Rotoren anzutreiben oder fähig ist, spezifische Rotoren simultan anzutreiben.

11. Luftgestütztes Robotersystem nach Anspruch 10, wobei jeder der Rotoren (11 a, 11 b, 11 c, 11 d) antreibbar ist durch einen oder mehrere spezifische Motoren (15).

12. Luftgestütztes Robotersystem nach einem der vorherigen Ansprüche, mit einem Bauteil, das dazu ausgebildet ist, eine Notlandung des Fluggeräts (4) durchzuführen für den Fall eines Fehlers oder eines Verklemmens eines der Rotoren (11a, 11b, 11c, 11d).

13. Luftgestütztes Robotersystem nach Anspruch 12, wobei das Bauteil dazu ausgebildet ist, den Versatz eines oder mehrerer der Rotoren (11 a, 11 b, 11 c, 11 d) zu variieren gemäß der Signale, die von dem Steuermittel (8) erfasst werden, um so die Traktion, die an das Fluggerät mittels der Rotoren (11a, 11b, 11c, 11d) geliefert wird, einzustellen.

## Revendications

1. Système robotique aérien, comprenant un aéronef (4) équipé de quatre rotors (11a, 11b, 11c, 11d), ledit aéronef (4) comprenant des moyens de commande (8) pour commander des paramètres de fonctionnement de chacun desdits rotors (11a, 11b, 11c, 11d) indépendamment les uns des autres, des moyens de détection (9) pour détecter l'état de mouvement et/ou la position dudit aéronef (4), des moyens (12) à base de capteurs coopérant avec lesdits moyens de commande (8) pour détecter et éviter de manière automatique de possibles obstacles situés le long de la trajectoire dudit aéronef (4), une unité au sol (3) configurée pour commander du sol ledit aéronef (4) et pour recevoir des données en provenance dudit aéronef (4) par l'intermédiaire d'une connexion de type sans fil, et un dispositif d'interface (7) pour commander du sol ledit aéronef (4) et/ou pour afficher lesdites données,
**CARACTERISE EN CE QUE** ledit aéronef (4) est équipé d'un capteur inertiel et de navigation (9), avec un GPS (Système de Positionnement Global) et avec un capteur de paramètres embarqué (10) qui communiquent avec les moyens de commande (8) et leur envoient des données relatives à la position et à l'état de mouvement de l'aéronef (4), lesdits moyens de commande (8) et ladite unité au sol (3) étant configurés d'une manière telle qu'à une commande donnée par ledit dispositif d'interface (7) et associée à une direction par rapport audit dispositif d'interface (7), il correspond une variation de mouvement dudit aéronef (4) dans ladite même direction, d'une manière qui est indépendante de la direction de progression, ainsi que du positionnement et de l'orientation dudit aéronef (4) par rapport audit dispositif d'interface (7).

2. Système robotique aérien selon la revendication 1, comprenant en outre un dispositif pour faire varier le pas collectif des pales (13) de chaque rotor (11a, 11b, 11c, 11d), le pas collectif associé à chaque rotor (11a, 11b, 11c, 11d) étant variable d'une manière qui est indépendante des autres rotors.

3. Système robotique aérien selon la revendication 1 ou 2, dans lequel lesdits rotors (11a, 11b, 11c, 11d) tournent autour d'axes respectifs (A) convergeant mutuellement dans une région située au-dessus dudit aéronef (4).

4. Système robotique aérien selon la revendication 3, dans lequel chacun desdits axes (A) est incliné par rapport à un axe symétrique (B) dudit aéronef (4).

5. Système robotique aérien selon l'une quelconque des revendications 1 à 4, comprenant en outre une structure de protection ayant une forme destinée à empêcher un contact entre des parties associées aux rotors (11a, 11b, 11c, 11d) et des corps externes.

6. Système robotique aérien selon l'une quelconque des revendications 1 à 5, ledit aéronef (4) étant équipé de moyens d'acquisition et de transmission de données et/ou d'informations sensorielles, lesdits moyens d'acquisition et de transmission de données et/ou d'informations sensorielles comprenant : une caméra vidéo standard et/ou une caméra vidéo infrarouge, et/ou une caméra et/ou des spectrographes, et/ou des caméras hyperspectrales et/ou des caméras multispectrales.

7. Système robotique aérien selon la revendication 6, dans lequel lesdits moyens de commande (8) sont configurés pour faire varier la vitesse de rotation desdits rotors (11a, 11b, 11c, 11d) afin de rendre maximale(s) l'autonomie et/ou la stabilité dudit système robotique aérien (1), en fonction de conditions de fonctionnement de vol telles que l'altitude, les conditions météorologiques, et/ou en fonction du poids desdits moyens d'acquisition et de transmission de données et/ou d'informations sensorielles.

8. Système robotique aérien selon l'une quelconque des revendications 1 à 7, comprenant en outre un système de liaison et d'enlèvement rapides des rotors (15) sur ledit aéronef (4), ledit système comprenant des connecteurs pour la connexion électrique et la transmission de données et/ou de signaux entre lesdits rotors (15) et lesdits moyens de commande (8).

9. Système robotique aérien selon l'une quelconque des revendications 1 à 8, comprenant en outre des moyens de moteur (15) pour entraîner lesdits rotors (11a, 11b, 11c, 11d).

10. Système robotique aérien selon la revendication 9, dans lequel lesdits moyens de moteur comprennent une pluralité de moteurs (15), dont chacun est apte à entraîner de manière sélective un ou plusieurs rotors spécifiques, ou est apte à entraîner des rotors spécifiques de manière simultanée.

11. Système robotique aérien selon la revendication 10, dans lequel chacun desdits rotors (11a, 11b, 11c, 11d) peut être entraîné par un ou plusieurs moteurs (15) spécifiques.

12. Système robotique aérien selon une quelconque revendication précédente, comprenant un dispositif configuré pour effectuer un atterrissage d'urgence dudit aéronef (4) dans l'éventualité d'un défaut ou d'un blocage de l'un desdits rotors (11a, 11b, 11c, 11d).

13. Système robotique aérien selon la revendication 12, dans lequel ledit dispositif est configuré pour faire varier le pas d'un ou de plusieurs desdits rotors (11a, 11b, 11c, 11d) en fonction de signaux détectés par lesdits moyens de commande (8), de manière à ajuster la traction fournie à l'aéronef (4) par lesdits rotors (11a, 11b, 11c, 11d).
